# EUROPEAN PATENT APPLICATION

(11) **EP 0 812 543 A2**
(43) Date of publication of application: **17.12.1997**
(21) Application number: 97303993.6
(22) Date of filing: 09.06.1997
(51) Int. Cl.: A23B 7/022

(54) **Treatment of dried fruit**

(30) Priority: 10.06.1996 GB 9612137
(71) Applicant: THE QUAKER OATS COMPANY, Chicago Illinois 60610 (US)
(72) Inventor: Mesu, Gurbe, 5301 DC Zaltbommel (NL); Boot, Jacobus, 3123 EN Schiedam (NL)
(74) Representative: Schlich, George William

(57) **Abstract**

Humectant, such as glycerol, is infused into dried fruit, such as raisins, which are then washed and dried to make a humectant containing product. The water activity of the dried fruit does not rise above the water activity desired in the product - allowing rapid drying of the dried fruit once it has been washed. There is provision in the method of the invention for continuous washing and drying of the dried fruit, and apparatus is provided for this purpose.

## Description

This invention relates to treatment of dried fruit, and in particular to treatment of dried fruit with a humectant for use in combination with dry food products such as breakfast cereals.

It is known to treat dried fruit, in particular raisins, with a humectant so as to improve the softness retention characteristics of the dried fruit. This treatment is commonly carried out prior to mixing of dried fruit with other dry food products, such as breakfast cereals, so that during storage the softness and texture of the dried fruit is not adversely affected by storage with the other dry food products. Dried fruits added to breakfast cereals, in the absence of treatment with a humectant, rapidly loose their softness and become rather hard and unpalatable due to loss of moisture to other components of the breakfast cereal.

EP-A-0337249 describes a process for infusing high levels of humectant into dried fruits, for use in dry foods such as in mixes and ready-to-eat cereals. The process described typically comprises coating a dried fruit such as raisins with a humectant and thereafter allowing the coated dried fruit to stand for a period of time sufficient for the humectant to become infused into the dried fruit. Using the process described, a standing time of approximately four weeks is suggested, a time period which can be unattractive from a commercial point of view.

US-A-5000971 describes a similar process in which even higher levels of humectant are infused into dried fruit, again over a long time period.

US-A-3952112 describes a process for treating dried fruits with an edible water soluble humectant so as to establish a humectant level absorbed by the fruit of at least about 4 percent. US-A-3952112 is concerned primarily with pre-treatment of the dried fruit so as to increase the rate and/or amount of humectant uptake by the dried fruit. It is suggested that the rate of absorption of humectant can be increased by using a dilute solution of humectant, by increasing the initial moisture content of the fruit, by treating the fruit surface and by removing air bubbles from the fruit surface. The methods described suffer from a number of drawbacks. The problem of drying the fruit once treated with humectant in an aqueous solution is not addressed, in addition a number of pre-treatments involve additives that are not desirable in a product aimed at human consumption.

Of greater relevance to the present invention is a known commercial process for infusion of humectant into dried fruit to prepare the dried fruit for inclusion in food products such as breakfast cereals. Despite the methods described in the patent publications referenced above, it is believed by the present inventors that the commercial process most commonly in use at the present time is rather different from those described in the patent publications.

The commercial process in question is used for preparing a variety of dried fruits, including raisins and dried apple, pear, apricot, pineapple and papaya, for use in dried food products such as breakfast cereals. The process includes soaking the dried fruit in a glycerol solution, normally glycerol in water at a ratio of about 1:1, at a temperature at approximately 50-55°C for between 1 and 5 hours. 2-3 hours is a typical duration. Subsequently, excess liquid is drained and the fruit is washed with water to remove humectant from the surface of the fruit. Finally, the washed fruit is then dried.

This process, though in commercial operation, nevertheless suffers from a number of identified problems. First, it is a batch process; over the duration of a typical 8 hour shift, one batch of dried fruit can be produced, and is usually around 100-200 kilograms per shift. Secondly, the washing step is carried out manually, with dried fruit on drainage racks and water sprayed over the dried fruit by hand. This is a time consuming and labour intensive step. Thirdly, the drying step requires rather a long duration, typically around several hours.

It would be advantageous if the process, or at least part of the process, could be carried out continuously. However, the steps in the known commercial process are such that they are suitable only for batch processing of dried fruit.

It is an object of the present invention to provide a method for treatment of dried fruit so as to infuse humectant into the dried fruit that is at least partly continuous. Another object of the invention is to increase the turnover of dried fruit quantity through the treatment process. A further object is to provide method and apparatus for continuous washing and drying of humectant treated dried fruit. A still further object is to reduce the time needed for the washing and drying steps.

Accordingly, a first aspect of the invention provides a method for infusing a humectant into a dried fruit so as to produce a humectant - containing dried fruit product, wherein after infusing the humectant into the dried fruit and washing off excess humectant from the surface of the dried fruit, the water activity of the dried fruit is substantially the water activity desired in the eventual product. An advantage of this method is that the water activity of the dried fruit does not thereafter need to be adjusted.

In an embodiment of the invention there is provided a method of infusing an humectant into dried fruit comprising:-
allowing the dried fruit to contact a humectant or to contact a solution comprising a humectant so as to infuse humectant into the dried fruit but so as substantially not to increase the water activity of the dried fruit;
washing the dried fruit to remove excess humectant from the outside of the dried fruit; and
drying the outside of the dried fruit.

The product of the method is a humectant-treated dried fruit suitable for incorporation into a dry food product such as a breakfast cereal. The method is thus carried out substantially without increasing the water activity of the dried fruit meaning that the drying step is aimed only at removing water from the surface of the fruit.

It is preferred that by the conclusion of the washing step the water activity of the dried fruit is at the water activity desired in the eventual product. It is further preferred that the water activity of the dried fruit is substantially not affected by any step in the method and that, consequently, the water activity of the dried fruit remains substantially the same throughout the method.

To infuse humectant into the dried fruit, a step also known as incubation, the dried fruit is allowed to remain in contact with humectant or humectant solution for an extended period of time. In the invention this time period is usually in excess of 3 hours and typically more than 6 hours. In a specific embodiment of the invention incubation is carried out overnight for approximately 16 hours. Incubation is generally at elevated temperature such as 45°C or higher and typically in the range 50-60°C.

While neither the temperature nor the duration is critical to the invention, the higher the temperature and the longer the duration, the greater the amount of humectant will be infused into the fruit. The target level of humectant in the product may vary between products, and for raisins a level of 14% or greater is desirable where the raisins are to be combined with ready to eat cereals. The incubation parameters are thus to be adjusted according to the desired product qualities.

A further embodiment of the invention provides a method of infusing glycerol into dried fruit comprising:-
treating dried fruit with a solution of glycerol until the glycerol level of the dried fruit is at least 14%, while substantially not increasing the water activity of the dried fruit;
washing and drying the glycerol-treated dried fruit to remove water and/or glycerol from the outside of the dried fruit;
wherein during the drying step substantially no water is removed from inside the dried fruit.

The desired glycerol level of the dried fruit is adapted according to the nature of and the intended use of the dried fruit. Raisins for use in breakfast cereal typically have a humectant level of at least 14% and preferably at least 16% by weight.

In another embodiment of the invention there is provided a method of infusing a humectant into dried fruit comprising:-
(a) treating dried fruit with a humectant or with a solution of a humectant so as to infuse humectant into the dried fruit;
(b) washing the dried fruit to remove any excess humectant from the surface of the dried fruit; and
(c) removing washing solution from the surface of the dried fruit by drying:
wherein during steps (a) and (b) the water activity of the dried fruit is not allowed to rise above 0.6 and during step (c) substantially no water is removed from inside the dried fruit.

In a still further embodiment of the invention, a method of infusing a humectant into dried fruit comprises:-
(a) treating dried fruit with a humectant or with a solution of a humectant so as to infuse humectant into the dried fruit;
(b) washing the dried fruit to remove any excess humectant from the surface of the dried fruit; and
(c) removing washing solution from the surface of the dried fruit by drying to produce a humectant-containing dried fruit product;
wherein at the end of step (b) the water activity of the dried fruit is substantially the water activity desired in the humectant-containing dried fruit product; and
during step (c) substantially no water is removed from inside the dried fruit.

In all of these embodiments of the invention, it is of advantage that the step of infusing humectant into the dried fruit results in a humectant-containing dried fruit product in which the water activity after washing is substantially the water activity desired in the eventual product. Consequently, the subsequent drying step addresses only the problem of removing water from the surface of the humectant-containing dried fruit product. The drying step of the invention is then conveniently carried out at elevated temperature for a duration sufficient to dry the outside of the fruit but insufficient to cause any significant cooking of or other detrimental change in the fruit. This enables the duration of the drying step to be significantly reduced.

In an embodiment of the invention, the washing step comprises washing the fruit with water to remove excess humectant or to remove excess humectant solution from the outside of the dried fruit. It is further preferred that the washing is a continuous process wherein dried fruit to be washed is continuously passed through a washing station in which humectant or humectant solution is removed by washing from the outside of the dried fruit. A typical method of achieving the continuous washing step is for the washing to be carried out by spraying the dried fruit with water while the dried fruit passes through agitating means such as a tumbler to continuously agitate or shake or turn the dried fruit to ensure efficient washing.

In a specific embodiment of the invention, described in an example below, humectant-treated fruit to be washed is passed through a centrifugal pump with excess water.

The aim of the drying step in the method of the present invention is rapidly to dry the fruit to remove washing solution such as water from the surface of the fruit without causing any significant internal change to the dried fruit such as cooking or caramelization or reducing the water content.

In an embodiment of the invention, the drying step comprises rapidly drying the fruit to remove water from the surface of the dried fruit, at elevated temperature, typically in an oven. The drying step is of relatively short duration, being sufficiently long to remove water from the outside of the fruit substantially without reducing the internal water content. It is particularly preferred that the drying step is carried out in a continuous oven, such as a belt oven, at a temperature between 90 and 150°C. A typical residence time for fruit passing through the oven is between 30 seconds and 3 minutes.

In a specific embodiment of the invention, described in detail in an example below, the washing and drying steps of the invention are carried out as a continuous process. Humectant-treated dried fruit is pumped through a cleaning system comprising a centrifugal pump in which excess water is used to wash away excess humectant and washed fruit emerges at the output and is sieved to separate it from the water. Thereafter the fruit passes directly into a continuous drying oven, a belt oven, for a period of approximately 1 minute to dry the surface of the fruit.

In use of the embodiments of the invention the total time spent between fruit entering the washing stage and exiting the drying stage is generally no more than 10 minutes, typically less than 6 minutes and preferably less than 3 minutes. This time is sufficient to dry the fruit without causing any adverse changes therein.

In use of a specific embodiment of the invention, approximately 500-600 kilograms of raisins are placed into an incubator and incubated for between 8 and 16 hours in a concentrated glycerol solution. During this time the temperature of the incubator is maintained at approximately 50-60°C. After incubation the now glycerol-containing raisins have a water activity of about 0.55 and are subjected to a washing step to wash off excess glycerol from the surface of the raisins. The raisins are pumped through a continuous cleaning system in which water is mixed with the raisins to wash glycerol from their surfaces. On exiting the cleaning system, now washed, the fruit passes directly onto the belt of a belt oven and during passage through the belt oven is subjected to a temperature of about 120°C for about 1 minute.

While in the specific exemplified uses a concentrated glycerol solution is the humectant, a number of other humectants are known in the art and are suitable for use in the process of the invention. As will be appreciated by a person of skill in the art, using an alternative humectant may necessitate changes in the drying time or incubation time and these changes will be readily discernable to a person of skill in the art. Other suitable humectants for use in the invention include sorbitol, glycerol, glycerol syrup, glucose and mixtures thereof.

According to the dried fruit that is treated in the invention, the concentration of humectant or humectant solution is adapted such that after infusing humectant into the dried fruit, the water activity of the dried fruit has not exceeded the water activity desired in the dried fruit product, namely 0.6. The prior art commercial process uses a 1:1 glycerol: water mixture, but this is too dilute to be used in the invention. Instead, a more concentrated solution is used. For treatment of raisins a mixture of at least 2 parts glycerol to 1 part water is needed, preferably around 3:1, giving a solution of 70-80 percent glycerol. In an example below the concentration is about 75%.

When other humectants are used the concentration of humectant or humectant solution is such that the water activity of the dried fruit does not exceed 0.6. In the case of brine, a 15% solution is suitable. Other choices of humectant will be known to persons of skill in the art.

The dried fruit that is suitable for use in the invention includes raisins, and dried pear, pineapple, papaya and apricot. Generally speaking, though, the method can be adapted for use with a very wide variety of fruits.

In a second aspect of the invention, there is provided apparatus for continuously washing and drying dried fruit infused with a humectant, the apparatus comprising:-
a washing station comprising means for continuously receiving dried fruit infused with a humectant, means for washing said dried fruit and means for transferring said washed dried fruit to a drying station; and
a drying station comprising means for drying the washed dried fruit so as to remove water substantially only from the surface thereof.

In an embodiment of the invention, the apparatus is adapted to wash the dried fruit so as to remove humectant therefrom and then to pass washed dried fruit rapidly through the drying station so as to remove water substantially only from the surface of the dried fruit substantially without heating or cooking or otherwise adversely affecting the dried fruit.

The drying station comprises, in a specific embodiment of the invention, a belt oven and one preferably adapted to operate at a temperature of between 90 and 150°C and at a speed such that dried fruit takes from 3 minutes to 20 seconds to pass through. An oven at about 110-130°C is particularly suitable for raisins, as is a belt speed giving a drying time of about 30-90 seconds.

In a specific embodiment of the invention described below the washing station comprises means for agitating the dried fruit while applying thereto a washing liquid or a washing solution. The agitating means preferably comprises a centrifugal pump for turning dried fruit whilst washing dried fruit with water. According to the invention, rapid transit through the washing station ensures that little or no water enters the dried fruit during this stage.

Apparatus according to the invention optionally further comprises means for incubating dried fruit in humectant, means for separating dried fruit from excess humectant or humectant solution, and means for passing the (now humectant-treated) dried fruit to the washing station for washing of humectant from the surface of the (now humectant-treated) dried fruit.

Typically, the apparatus has a large volume incubating vessel for incubation of dried fruit, say overnight or for the appropriate desired duration, in humectant or humectant solution. A valve is provided that can be opened to allow transfer to a second vessel in which excess humectant is drained away or otherwise separated from the dried fruit, for example by sieving. Draining of humectant can alternatively be carried out by direct draining from the incubation vessel.

The oldest way of conserving foods is drying as dried food products are not deteriorated by microorganisms. Due to the lack of water, or low "water activity",the microorganisms can not grow on the food.

The term "water activity" has a conventional meaning in this art and can be determined by measurement with suitable apparatus, such as a Thermocouple Psychrometer SC10 (TM, Decagon Devices Pullman, Washington) in combination with a 21 X Micrologger (TM, Campbell Scientific, Inc). The water activity (A_{w}) is a way of expressing the amount of free water available in a food product. For example, water has an A_{w} of 1.00 whereas glycerol has an A_{w} of 0.00. Microorganisms are able to grow in substrates with an A_{w} from 0.6 to 1.00. So to have a stable food product the A_{w} ought to be below 0.60.

The known commercial prior art process incubates the dried fruit particles (having initial A_{w} <0.6) in a water glycerol mixture for several hours (2 to 6h). The A_{w} of the incubation fluid is higher then 0.6 in order to shorten the incubation time. Afterwards the particles are rinsed in water to remove the surplus glycerol and placed on drying trays. These handling steps are about 3 hours per batch (about 200 kg). During incubation, rinsing and placing on trays the particles are able to absorb water. This leads to an A_{w} far above 0.6 for the treated fruit. The fruit particles subsequently need to be dried for a long time to remove the absorbed water. This can only be done at relatively low temperatures.

The present invention is based upon incubation of dried fruit (having, typically, initial A_{w} < 0.6) in a humectant plus water mixture of reduced water activity, typically less than 0.6, so that the treated fruit has an A_{w} < 0.6. Surplus glycerol (or other humectant) has then to be removed. If this is done in a way in which substantially no water absorption occurs, no drying is necessary other than to remove water from the fruit surface.

Rinsing of humectant from the fruit according to the invention is typically done by passing the fruit particles with an excess of water through a centrifugal pump. The fruit particles are sieved off and are passed immediately through a drier. The rinsing and sieving operation typically takes about 2 seconds. Little or no water absorption will occur during this time. The drying process can be done in a short time (a typical time is 20-90 seconds) and at higher temperature (a typical temperature in a continuous oven is 90-150°C). This is because the water to be removed is only on the surface of the particles. After drying the fruit is cooled and packed. The process is thus continuous from rinsing to packing, while incubation is still a batch process.

In commercial use it is convenient to incubate during the evening and night. During daytime the incubator is filled again. One batch size used with good results is about 2000 kg. The rinsing, drying and packing is completely automatic. The manual labour consists of:-
* filing the incubator (1800 kg/day)
* storing the treated fruit (2000 kg/day)

This can be done by one person during a day-shift.

Specific embodiments of the invention are now described in which:-

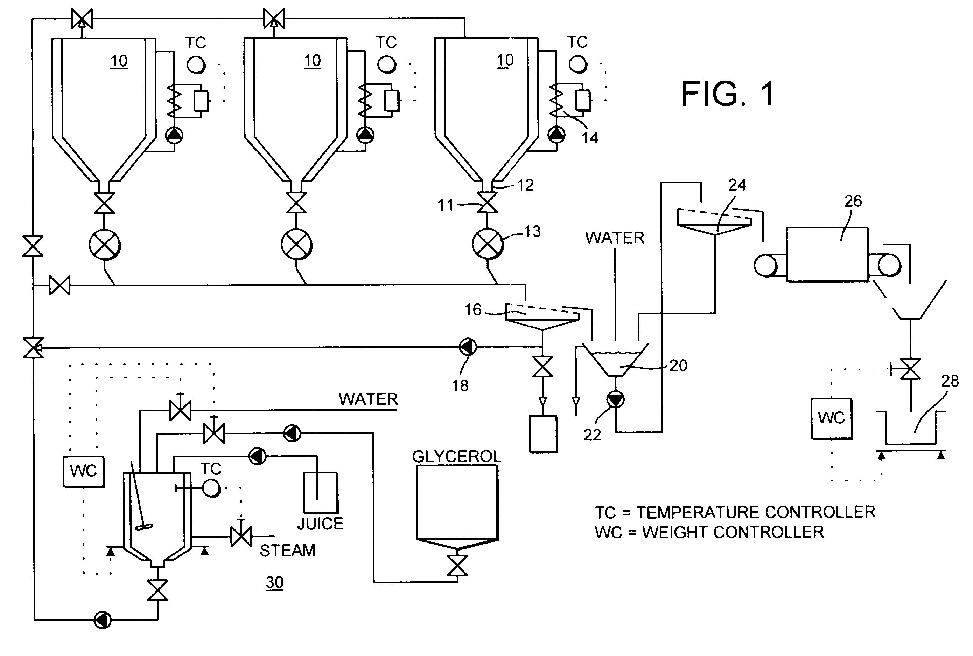

Fig 1 is a schematic diagram of plant for carrying out the method of the invention.

### EXAMPLES

The process consists of five operation units:

incubation, discharge, draining, rising and drying.

The process has been tested in three stages:
* lab scale: 100 grams of fruit were treated
* pilot plant scale: 150 kg fruit were treated
* life scale: 600 kg fruit were treated.

The tested fruits were:
* lab scale: apricot, papaya, pineapple, raisin, pear
* pilot plant scale: apricot papaya, raisin
* life scale: apricot, raisin.

The following matrix shows which operation units were tested in which scale.

| | lab scale | pilot plant scale | life scale |
|---|---|---|---|
| incubation | * | * | * |
| discharge | | * | * |
| draining | | * | |
| rinsing | | * | * |
| drying | * | | |

### RESULTS

### INCUBATION

Incubation in a 75% glycerol solution on life scale gave good results. The glycerol % of the fruit is adjustable by altering the incubation temperature. The higher the incubation temperature the higher the glycerol percentage. Temperature regulation with the equipment used worked well, only small temperature differences (± 3°C) throughout the incubated mass were found. Pulsating aeration of the incubated mass is necessary for good incubation results. The ratio between fruit and incubation fluid was 60:40.

### DISCHARGE

Discharge using a rotary valve was tested on life scale. The system worked well if free incubation fluid is available. Pilot plant incubation tests showed that free incubation fluid is available for all fruit types.

### DRAINING

Pilot plant tests showed a simple vibrating sieve can take care of the draining. About 45% of the originally added incubation fluid can be drained off. The drained off fluid has a composition of about 55% glycerol 20% water and 25% solids. The drained off fluid can be used in the next batch of the same fruit type.

### RINSING

Rinsing is done by passing the fruit with an excess of water through a centrifugal pump. Directly after rinsing the fruit is sieved off on a vibrating sieve. Test results were good. No sticky layer on the fruit, and not one fruit lump were seen. About 35% of the originally added incubation fluid was rinsed off.

### DRYING

Only the rinsing water on the surface of the fruit particles is to be dried off. This was done in a period of one minute at temperatures of about 120°C.

### PRODUCT RESULTS

The results using the process of the invention were compared with results obtained using the prior art commercial process.

| | Moisture % | Glycerol % |
|---|---|---|
| Invention | | |
| Raisins | ± 21 | ± 25 |
| Papaya | ± 16 | ± 35 |
| Apricot | ± 21 | ± 26 |
| | | |

| "Superfruit" Prior Art Process | | |
|---|---|---|
| Raisins | ± 14 | ± 16 |
| Papaya | ± 15 | ± 18 |
| Apricot | ± 14 | ± 20 |

The treated fruit of the invention contains more water and more glycerol.

The A_{w} of all products is under 0.55, and thus are all microbiologically stable.

Taste of all fruit types is good.

Fruit treated by the invention is more loose and less sticky then fruit treated by the "superfruit" process.

### DESCRIPTION OF THE INSTALLATION

### 1) INCUBATION VESSEL

The incubation vessel (10) is a 1000 litre isolated jacketed vessel with 30° conical bottom.

An outlet opening (12) at the bottom is 3 inches in diameter. The vessel has a water circulation system and heating unit (14) for the jacketed wall, with air nozzles at the outlet and half way down the conical bottom.

### 2) OUTLET VALVE

The valve outlet (11) is 3 inches in diameter.

### 3) ROTARY VALVE

The rotary valve (13) has an inlet and outlet 3 inches in diameter. Blades are made of flexible foodgrade rubber. Easy opening for internal cleaning.

### 4) VIBRATING SIEVE (16)

The sieve has perforations of 3mm diameter and a sieve deck that is easily detachable.

### 5) TRANSPORT PUMP (18)

This provides a liquid flow in order to transport the discharged fruit to the drain sieve. Surplus sieved off glycerol solution is pumped back into the corresponding incubator.

### 6) VORTEX TANK (20)

A vortex tank (20) is the inlet in the rinsing system for the drained fruit, and is where fresh water is added.

### 7) CENTRIFUGAL PUMP (22)

Provides a rinsing water circulation.

### 8) DEWATERING SIEVE (24)

Sieves off the fruit particles.

### 9) DRYER/COOLER (26)

Dries the surface of the rinsed fruit and cools it to ambient temperatures.

### 10) WEIGHING SCALE (28)

Fills containers with the desired amount of fruit. A hopper and valve are placed above the crates to be filled. The valve is closed during changing of the crates.

### 11) SYRUP VESSEL (30)

The vessel weights the right amounts of glycerol and water. The drained off glycerol solution of the former batch is added to the vessel. All ingredients are mixed and heated to 85°C.

The invention thus provides improved method and apparatus for humectant treating of dried fruit. Modifications and variations within the invention will be apparent to a person of skill in the art.

## Claims

1. A method for infusing a humectant into a dried fruit so as to obtain a humectant-containing dried fruit product, wherein after infusing the humectant into the dried fruit and washing off excess humectant from the surface of the dried fruit, the water activity of the dried fruit is substantially the water activity desired in the eventual product.

2. A method according to Claim 1 comprising, after washing the dried fruit, drying the dried fruit in air to remove water from the surface of the dried fruit substantially without removing water from within the dried fruit.

3. A method according to Claim 2 comprising drying the dried fruit in hot air.

4. A method of infusing a humectant into dried fruit according to any preceding claim comprising:-
allowing the dried fruit to contact a humectant or to contact a solution comprising a humectant so as to infuse humectant into the dried fruit but so as substantially not to increase the water activity of the dried fruit;
washing the dried fruit to remove excess humectant from the outside of the dried fruit; and
drying the outside of the dried fruit.

5. A method of infusing a humectant into dried fruit according to any preceding claim comprising:-
(a) treating dried fruit with a humectant or with a solution of a humectant so as to infuse humectant into the dried fruit;
(b) washing the dried fruit to remove any excess humectant from the surface of the dried fruit;
(c) removing washing solution from the surface of the dried fruit by drying to produce a humectant-containing dried fruit product;
wherein at the end of step (b) the water activity of the dried fruit is substantially the water activity desired in the humectant-containing dried fruit product; and
during step (c) substantially no water is removed from inside the dried fruit.

6. A method of infusing a humectant into dried fruit comprising:-
(a) treating dried fruit with a humectant or with a solution of a humectant so as to infuse humectant into the dried fruit;
(b) washing the dried fruit to remove any excess humectant from the surface of the dried fruit; and
(c) removing washing solution from the surface of the dried fruit by drying;
wherein during steps (a) and (b) the water activity of the dried fruit is not allowed to rise above 0.6.

7. A method according to Claim 6, wherein during step (c) substantially no water is removed from inside the dried fruit.

8. A method according any preceding claim for preparation of dried fruit for incorporation into breakfast cereal.

9. A method according to any preceding claim wherein the dried fruit is selected from raisins and dried pear, pineapple, papaya and apricot.

10. A method according to any preceding claim wherein the dried fruit is raisins.

11. A method according to any preceding claim wherein the humectant is selected from sorbitol, glycerol, glycerol syrup, glucose and mixtures thereof.

12. A method according to any preceding claim wherein humectant is glycerol.

13. A method according to Claim 12 comprising treating the dried fruit with a solution containing at least 2 parts glycerol to 1 part water.

14. A method according to Claim 13 comprising treating the dried fruit with a solution containing 70-80% glycerol.

15. A method of infusing glycerol into dried fruit comprising:-
treating dried fruit with a solution of glycerol until the glycerol level of the dried fruit is at least 14%, while substantially not increasing the water activity of the dried fruit; and
washing and drying the glycerol-treated dried fruit to remove water and/or glycerol from the outside of the dried fruit;
wherein during the drying step substantially no water is removed from inside the dried fruit.

16. A method according to claim 1 comprising treating dried fruit with a solution of glycerol until the glycerol level of the dried fruit is at least 16%.

17. A method according to Claim 15 or 16 wherein the dried fruit is raisins.

18. A method according to any preceding claim wherein the water activity of the dried fruit remains substantially the same throughout the process.

19. A method according to any preceding claim wherein the water activity of the dried fruit product is ≤ 0.55.

20. A method according to any preceding claim comprising incubating the dried fruit in humectant or a humectant solution for at least 3 hours.

21. A method according to any preceding claim comprising incubating the dried fruit in humectant or a humectant solution for at least 6 hours.

22. A method according to Claim 20 or 21 comprising incubating the dried fruit at least 45°C.

23. A method according to Claim 22 comprising incubating the dried fruit at 50-60°C.

24. A method according to any preceding claim comprising drying the washed dried fruit at elevated temperature for sufficient time to dry the outside of the dried fruit but substantially without causing any significant corking or other detrimental change in the dried fruit.

25. A method according to Claim 24 comprising drying the washed dried fruit at 90-150°C.

26. A method according to any preceding claim comprising washing humectant off the surface of the dried fruit in a continuous process.

27. A method according to Claim 26 comprising washing the dried fruit in a centrifugal pump with excess water.

28. Apparatus for continuously washing and drying dried fruit infused with humectant, comprising
(a) a washing station comprising means for continuously receiving said dried fruit, means for washing said dried fruit and means for transferring said washed dried fruit to a drying station; and
(b) a drying station comprising means for drying said washed dried fruit so as to remove water substantially only from the surface thereof.

29. Apparatus according to Claim 28 comprising a drying station adapted continuously to receive washed dried fruit from the washing station, dry said washed dried fruit to from dried fruit product and discharge said product.

30. Apparatus according to Claim 29 comprising a belt oven operating at a temperature of 90-150°C.

31. Apparatus according to Claim 30 wherein the belt oven is operable at speeds such that dried fruit passes through the oven in 20 seconds - 3 minutes.

32. Apparatus according to any of claims 28-31 comprising means for agitating the dried fruit whilst applying thereto a washing liquid or washing solution.

33. Apparatus according to any of Claims 28-32 for washing and drying of raisins, apricot, pear, pineapple or papaya.

34. Apparatus according to any of Claims 28-33 for carrying out the method of any of Claims 1-27, and further comprising
(a) means for incubating dried fruit in humectant or humectant solution,
(b) means for separating dried fruit from excess humectant or humectant solution, and
(c) means for passing the (now humectant-treated) dried fruit to the washing station for washing of humectant from the surface of the (now humectant-treated) dried fruit.

35. Apparatus according to Claim 34 comprising a large volume incubating vessel for incubation of dried fruit in humectant or humectant solution.

36. Apparatus according to Claim 34 or 35 comprising a valve in the incubation vessel that can be opened to allow excess humectant to drain away from the dried fruit.

37. Apparatus according to Claim 34 or 35 comprising a sieve for separation of dried fruit from excess humectant.
